# EUROPEAN PATENT SPECIFICATION

(11) **EP 2 369 376 B1**
(45) Date of publication and mention of the grant of the patent: **02.11.2016**
(21) Application number: 11157444.8
(22) Date of filing: 09.03.2011
(51) Int. Cl.: G02B 6/02, G02B 6/036

(54) **Multi-core optical fiber**
Mehrkernige Glasfaser
Fibre optique multinoyau

(30) Priority: 10.03.2010 JP 2010053402; 25.02.2011 JP 2011040601
(43) Date of publication of application: 28.09.2011
(73) Proprietor: Sumitomo Electric Industries, Ltd., Osaka-shi, Osaka 541-0041 (JP)
(72) Inventor: Sasaoka, Eisuke, Kanagawa 244-8588 (JP); Taru, Toshiki, Kanagawa 244-8588 (JP); Nagashima, Takuji, Kanagawa 244-8588 (JP)
(74) Representative: Hoffmann Eitle

(56) References cited:
- EP-A1- 0 193 921
- EP-A1- 1 061 385
- EP-A1- 1 918 743
- US-A- 5 479 550
- US-A1- 2003 165 313
- US-B1- 7 283 714
- KOKUBUN YASUO ET AL: "Novel multi-core fibers for mode division multiplexing: proposal and design principle", IEICE ELECTRONICS EXPRESS, DENSHI JOUHOU TSUUSHIN GAKKAI, JP, vol. 6, no. 8, 25 April 2008 (2008-04-25), pages 522-528, XP002635349, ISSN: 1349-2543, DOI: 10.1587/ELEX.6.522
- KOSHIBA MASANORI ET AL: "Heterogeneous multi-core fibers: proposal and design principle", IEICE ELECTRONICS EXPRESS, DENSHI JOUHOU TSUUSHIN GAKKAI, JP, vol. 6, no. 2, 25 January 2009 (2009-01-25), pages 98-103, XP002635350, ISSN: 1349-2543, DOI: 10.1587/ELEX.6.98

## Description

### BACKGROUND OF THE INVENTION

### Field of the Invention

The present invention relates to a multi-core optical fiber.

### Related Background Art

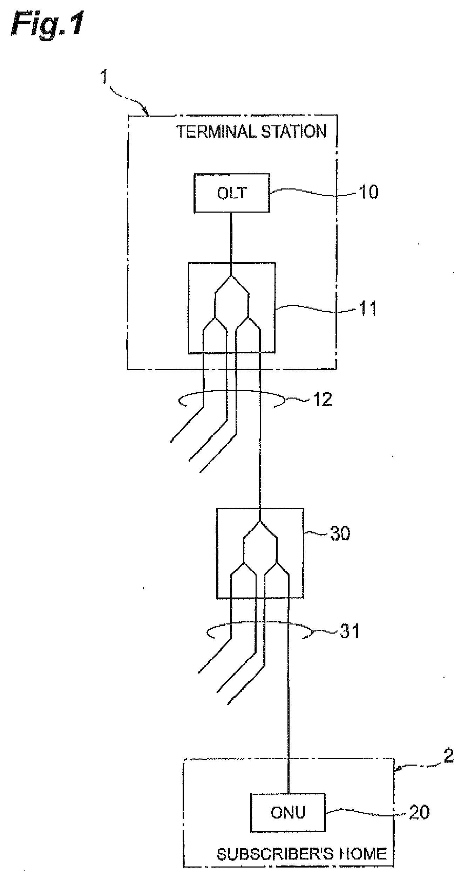

Conventionally, to provide FTTH (Fiber To The Home) services that enable optical communications between a single transmitter station and plural subscribers, for example, as shown in Fig. 1, a so-called PON (Passive Optical Network) system in which subscribers share a single optical fiber by interposing a multistage optical splitter is realized.

In other words, the PON system shown in Fig. 1 includes a terminal station 1 (transmitter station) that is a final relay station of an existing communication system such as the Internet, and an optical fiber network installed between the terminal station 1 and a subscriber's home 2 (subscriber). The optical fiber network is composed of a closure (including an optical splitter 30) provided as a branch point, an optical communication line 12 from the terminal station 1 to the closure, and an optical communication line 31 from the closure to each subscriber's home 2,

The terminal station 1 includes OLT (Optical Line Terminal) 10, and an optical branch element 11 that divides multiplexed signals supplied from the OLT 10. By contrast, the subscriber's home 2 is provided with ONU (Optical Network Unit) 20. In the closure serving as a branch point of the optical fiber network installed between the terminal station 1 and the subscriber's home 2, at least the optical splitter 30 for further dividing the received multiplexed signals, a wavelength selection filter for limiting service content, and the like are arranged.

As described above, in the PON system shown in Fig. 1, the optical branch element 11 is provided in the terminal station 1, and the optical splitter 30 is also provided in the closure arranged on the optical fiber network, thereby enabling the FTTH services to be provided from the single OLT 10 to plural subscribers.

However, in the PON system in which plural subscribers share a single optical fiber by interposing a multistage optical branch element as described above, it is a fact that there are technical problems with future increases in transmission capacity, such as congestion control and securing reception dynamic range. Examples of means for resolving these technical problems (congestion control, securing of dynamic range, and the like) include transition to SS (Single Star) system, In the case of transition to the SS system, because the number of fiber cores on the station side increases compared with the PON system, station-side optical cables with extremely small diameters and ultra-high densities become essential. A multi-core optical fiber is suitably used as an extremely small-diameter and ultra-high density optical fiber.

For example, an optical fiber disclosed in Japanese Patent Application Laid-Open No. 5-341147 (Document 1) as a multi-core optical fiber has seven or more cores that are two-dimensionally arranged on the cross-section thereof. In Japanese Patent Application Laid-Open No. 10-104443 (Document 2), an optical fiber in which plural cores are arranged in a line is disclosed, and there is a description of the fact that the connection with an optical waveguide and a semiconductor optical integrated element is facilitated.

### SUMMARY OF THE INVENTION

The present inventors have examined conventional multi-core optical fibers in detail, and as a result, have discovered the following problems. Namely, the multi-core optical fibers disclosed in Documents 1 and 2 are not sufficiently examined for reduction in transmission losses and nonlinearity. Consequently, there is a possibility that the multi-core optical fibers have problems when applied to large-capacity and long-haul transmission.

The present invention has been developed to eliminate the problems described above. It is an object of the present invention to provide a multi-core optical fiber in which transmission loss and nonlinearity are reduced.

A multi-core optical fiber according to the present invention is defined in claim 1 and comprises plural cores each extending along a predetermined axis direction, and a cladding surrounding the peripheries of the plural cores. The cladding is comprised of silica glass doped with fluorine, and each of the plural cores is comprised of silica glass doped with chlorine or pure silica glass.

In accordance with the multi-core optical fiber having such a structure described above, the plural cores each comprised of silica glass doped with chlorine or pure silica glass are arranged in the cladding comprised of silica glass doped with fluorine, whereby transmission loss and nonlinearity of light propagating in the plural cores of the multi-core optical fiber are reduced.

Here, the amount of doped chlorine may be different between cores arranged so as to be adjacent to each other among the plural cores. In this case, by employing an aspect in which the amount of doped chlorine may be different between cores adjacent to each other, it is possible to change the refractive index difference between adjacent cores arbitrarily. As a result, crosstalk between adjacent cores can be reduced.

It is preferable that the center-to-center spacing of cores adjacent to each other among the plural cores be 20 µm to 45 µm. When the center-to-center spacing of cores adjacent to each other is set within the above range, plural cores can be arranged in the cladding while crosstalk with a certain level is maintained.

At least one of a relative refractive index difference with respect to the cladding or a core diameter may is different between cores adjacent to each other among the plural cores, It is preferable that a difference is set greater than an arithmetic average of the plural cores by 5% or more.

Furthermore, the multi-core optical fiber according to the present invention comprises one or more leakage reduction portions for reducing leakage light propagating from each of the cores to a periphery thereof. In this case, at least a part of each of the leakage reduction portions exists on a straight line connecting cores adjacent to each other among the plural cores. In this manner, by providing each of the leakage reduction portions arranged such that at least a part thereof is positioned between cores adjacent to each other, crosstalk due to leakage light from each of the cores can be reduced effectively without increasing transmission loss of the multi-core optical fiber.

In the multi-core optical fiber according to the present invention, it is sufficient that at least one of the leakage reduction portions is formed in the cladding so as to have a ring shape surrounding an associated core among the plural cores, on the cross-section perpendicular to the predetermined axis direction. At least one of the leakage reduction portions may be a region that forms a refractive index profile such that a confinement factor of propagating light in a region surrounded by the leakage reduction portion is raised. More specifically, the leakage reduction portion is formed so as to effectively reduce the refractive index, or to increase the refractive index conversely. For example, as a structure for reducing the refractive index, by doping a refractive index reducer or forming a hollow hole in the cladding on peripheries of the plural cores, the leakage reduction portions are formed. Alternatively, as a structure for increasing the refractive index, by doping a refractive index increaser in the cladding on the peripheries of the plural cores, the leakage reduction portions may be formed.

In the multi-core optical fiber according to the present invention, at least one of the leakage reduction portions may be composed of a material that reduces power of propagating light. In this case, at least one of an absorption coefficient or a scattering coefficient of the constituent material is greater than that of the cladding.

### BRIEF DESCRIPTION OF THE DRAWINGS

Fig. 1 is a view showing a configuration of a conventional optical communication system (PON system);
Fig. 2 is a view showing a schematic structure of a multi-core optical fiber according to a first comparative example;
Fig. 3 is a view showing a cross-sectional structure of the multi-core optical fiber according to the first comparative example;
Fig. 4 is a view showing a cross-sectional structure of a multi-core optical fiber according to a second comparative example;
Figs. 5A and 5B are views for explaining arrangement conditions of a leakage reduction portion applied to a multi-core optical fiber according to the present invention;
Fig. 6 is a view for explaining the structure and the function of the leakage reduction portion as well as a leakage light generation mechanism;
Figs. 7A to 7D are views for explaining a first specific example of the leakage reduction portion applicable to the multi-core optical fiber according to the present invention; and
Figs. 8A and 8B are views for explaining a second specific example of the leakage reduction portion applicable to the multi-core optical fiber according to the present invention.

### DESCRIPTION OF THE REFERRED EMBODIMENT

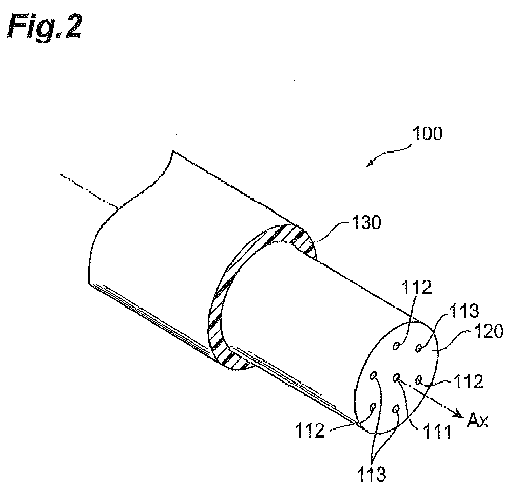

In the following, embodiments of a multi-core optical fiber according to the present invention will be explained in detail with reference to Figs. 2 to 5, 6A to 6B and 7A to 8B, In the description of the drawings, identical or corresponding components are designated by the same reference numerals, and overlapping description is omitted.

### (First Embodiment)

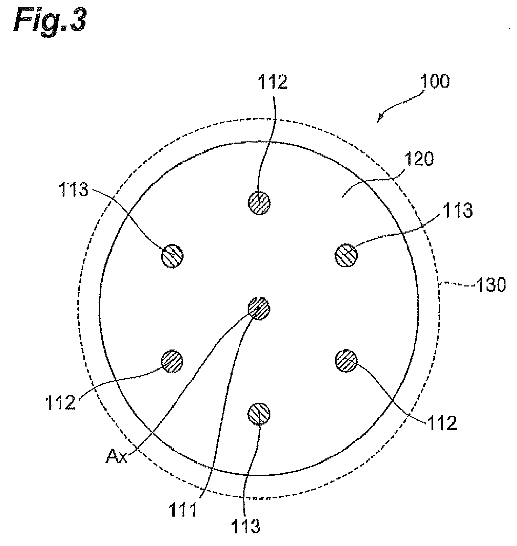

Fig. 2 is a view showing a schematic structure of a multi-core optical fiber according to a first comparative example. Fig. 3 is a view showing a cross-sectional structure of the multi-core optical fiber according to the first comparative example. A multi-core optical fiber 100 shown in Fig. 2 is an optical fiber extending along a center axis Aₓ (a predetermined axis corresponding to a longitudinal direction of the multi-core optical fiber 100), and comprises plural cores 111 to 113, a cladding 120 surrounding the peripheries of the plural cores 111 to 113 and having a circular cross-section on a plane perpendicular to the center axis Aₓ, and a covering portion 130 provided on the outer periphery of the cladding 120. In the cladding 120, a center core 111 provided in the center of the cladding 120 and extending along the center axis Aₓ, and two types of peripheral cores 112 and 113 provided in positions different from that of the center core 111 and extending along the center axis Aₓ are arranged. The peripheral cores 112 and 113 are arranged along the circumferential direction with respect to the center core 111 (center of the center core 111) such that any one of the peripheral cores 112 and any one of the peripheral cores 113 are arranged alternately. Six of the peripheral cores 112 and 113 are provided on the circumference in a manner equally spaced therebetween.

In the multi-core optical fiber 100, the center core 111 is composed of pure silica glass. The cladding 120 is composed of silica glass uniformly doped with fluorine such that the relative refractive index difference of the center core 111 composed of pure silica glass is 0.35%. The peripheral core 112 is composed of silica glass doped with chlorine of 0.3 wt%, and the peripheral core 113 is composed of silica glass doped with chlorine of 0.6 wt%. In such a configuration, the relative refractive index difference of the peripheral core 112 with respect to the cladding 120 is 0.38%, and the relative refractive index difference of the peripheral core 113 with respect to the cladding 120 is 0.41%. The relative refractive index differences between the center core 111, and the peripheral cores 112 and 113 are set values greater than the arithmetic average of the plural cores by 5% or more. In this manner, silica glass doped with chlorine is applied to the peripheral cores 112 and 113 for the following reason: silica glass doped with chlorine has a positive refractive index, and is capable of maintaining a high softening point and suppressing transmission losses. Therefore, the silica glass is effective for providing a refractive index difference between cores adjacent to each other.

In the multi-core optical fiber 100 having such a structure, for example, the diameters of the center core 111, and the peripheral cores 112 and 113 are set to 8 µm. The spacings between the center core 111 and the peripheral cores 112, 113 (distance connecting centers thereof), and the center-to-center spacing of any one of the peripheral cores 112 and any one of the peripheral cores 113 that are adjacent to each other along the circumferential direction with respect to the center core 111 (straight-line distance between the centers of cores adjacent to each other) are set to 35 µm, The diameter of the cladding 120 is 125 µm. With the covering portion 130 provided, the total diameter of the multi-core optical fiber 100 is 245 µm.

The multi-core optical fiber 100 having the cross-sectional structure shown in Fig. 3 is fabricated by the following method. At first, a silica glass rod uniformly doped with fluorine is prepared such that the relative refractive index difference of the center core 111 composed of pure silica glass is 0.35%. The silica glass rod eventually becomes the cladding 120. One pure silica glass rod, three silica glass rods doped with chlorine of 0.3 wt%, and three silica glass rods doped with chlorine of 0.6 wt% are prepared. The prepared silica glass rods are then extended and cut such that they have the same diameter and the same length. These silica glass rods eventually become the center core 111, and the peripheral cores 112 and 113.

Subsequently, the total of seven openings with the diameter larger than that of the seven silica glass rods thus extended and cut by approximately 5% are bored at the position of the center of the silica glass rod doped with fluorine, and positions equally distant from the center with an equal interval interposed between openings adjacent to each other. The pure silica glass rod (becoming the center core 111) is then inserted into the opening in the center of the fluorine-doped silica glass rod, which becomes the cladding 120. The silica glass rods doped with chlorine of 0.3 wt% (becoming the peripheral core 112), and the silica glass rods doped with chlorine of 0.6 wt% (becoming the peripheral core 113) are inserted alternatively into the six openings provided on the outer circumferential side of the fluorine-doped silica glass rod.

After that, by heating the fluorine-doped silica glass rod and the seven silica glass rods inserted thereto, the openings provided in the fluorine-doped silica glass rod are collapsed, thereby integrating the fluorine-doped silica glass rod and the seven silica glass rods inserted thereto. In this manner, a preform of the multi-core optical fiber is obtained. By drawing the preform obtained in appropriate drawing conditions, the multi-core optical fiber 100 according to the present embodiment is manufactured.

### (Second Embodiment)

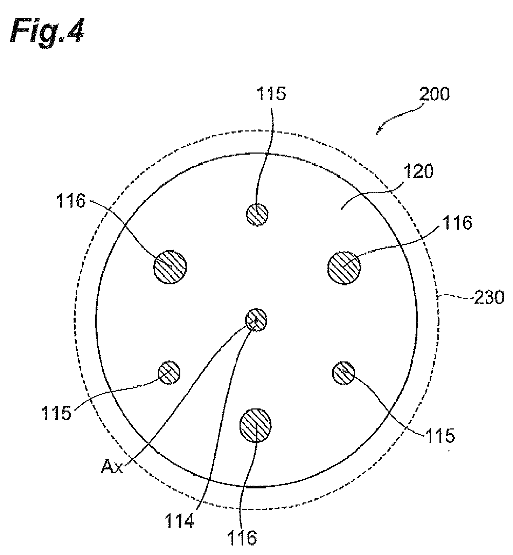

Fig. 4 is a view showing a cross-sectional structure of a multi-core optical fiber according to a second embodiment of the present invention. A multi-core optical fiber 200 is different from the multi-core optical fiber 100 (Fig. 3) in the following point: the relative refractive index differences of the center core and the peripheral cores are the same, and the diameters of peripheral cores arranged adjacent to each other are different. In the same manner as in Fig. 3, a cross-section corresponding to a plane perpendicular to the center axis Aₓ of the multi-corer optical fiber 200 is shown in Fig. 4.

In particular, the multi-core optical fiber 200 comprises plural cores 114 to 116, the cladding 120 surrounding the peripheries of the plural cores 114 to 116, and a covering portion 230 provided on the outer periphery of the cladding 120, In the center of the cladding 120 having a circular cross-section, a center core 114 extending along the center axis Aₓ is provided. In the cladding 120, any one of peripheral cores 115 and any one of peripheral cores 116 are arranged alternately along the circumferential direction with respect to the center core 114 (center of the center core 114). Six of the peripheral cores 115 and 116 are provided on the circumference with respect to the center core 114 in a manner equally spaced therebetween. This configuration is the same as that of the multi-core optical fiber 100.

The center core 114, and the peripheral cores 115 and 116 are composed of silica glass doped with chlorine of 0.3 wt%. The cladding 120 is composed of silica glass uniformly doped with fluorine such that each of the relative refractive index differences of the center core 114, and the peripheral cores 115 and 116 composed of chlorine-doped silica glass is 0.38%.

In the multi-core optical fiber 200 having such a structure, for example, the diameter of the center core 114 is set to 8.5 µm, the diameter of the peripheral core 115 is set to 7.9 µm, and the diameter of the peripheral core 116 is set to 9.2 µm. The center-to-center spacing between the center core 114 and the peripheral cores 115, 116, and the center-to-center spacing between any one of the peripheral cores 115 and any one of the peripheral cores 116 which are adjacent to each other are set to 40 µm. The differences in diameters between the center core 114, and the peripheral cores 115 and 116 are set values greater than the arithmetic average of the plural cores by 5% or more. The diameter of the cladding 120 is 125 µm. The total diameter of the multi-core optical fiber 200 including the covering portion 230 is 245 µm.

The multi-core optical fiber 200 is fabricated by the following method. At first, a silica glass rod uniformly doped with fluorine is prepared such that each of the relative refractive index differences of the center core 114 and the peripheral cores 115 and 116 composed of chlorine-doped silica glass is 0.38%. The silica glass rod eventually becomes the cladding 120. Seven silica glass rods doped with chlorine of 0.3 wt% are prepared. The prepared silica glass rods are then extended and cut such that they have the diameters of 8.5 µm (one rod), 7.9 µm (three rods), and 9.2 µm (three rods), and the same length. These silica glass rods eventually become the center core 114, and the peripheral cores 115 and 116.

Subsequently, the total of seven openings with the diameter larger than that of the seven silica glass rods thus extended and cut by approximately 5% are bored at the position of the center of the fluorine-doped silica glass rod, and positions equally distant from the center with an interval of 40 µm interposed between openings adjacent to each other. The silica glass rods doped with chlorine of 0.3 wt% are then inserted into the seven openings.

After that, by heating the fluorine-doped silica glass rod and the seven silica glass rods inserted thereto, the openings provided in the fluorine-doped silica glass rod are collapsed. In this manner, the fluorine-doped silica glass rod and the seven silica glass rods inserted thereto are integrated, whereby a preform of the multi-core optical fiber is obtained. By drawing the preform obtained in appropriate drawing conditions, the multi-core optical fiber 200 is manufactured.

The multi-core optical fiber 100 and the multi-core optical fiber 200 have the following characteristics compared with a multi-core optical fiber with a general structure, that is, a multi-core optical fiber that comprises plural cores each composed of silica glass doped with GeO₂, and a cladding composed of pure silica glass: because pure silica glass is used for at least a part of the cores, compared with an optical fiber to which GeO₂-doped cores are applied, transmission losses are reduced by approximately 0.02 dB/km, and the nonlinear refractive index is reduced by approximately 10%.

In the case of a multi-core optical fiber that comprises plural cores each composed of GeO₂-doped silica glass, and a cladding composed of pure silica glass, because the viscosity of the cores when heated is lower than that of the cladding, the shapes of the cores are likely to be changed when integrated by collapse (there is a possibility that the cross-section becomes a shape different from a true circle). In this case, polarization mode dispersion tends to increase. In contrast thereto, the pure silica glass constituting the center core 111, and the silica glass (each doped with chlorine of 0.3 wt% and 0.6 wt%) constituting the peripheral cores 112 and 113 included in the multi-core optical fiber 100 have a high viscosity when heated compared with the silica glass doped with fluorine constituting the cladding 120. Therefore, when integrated by collapse, the cladding portion is likely to deform, whereas the core portions are not likely to deform (during the drawing process, the shapes of the cores can be easily kept in a true circle shape). Accordingly, the polarization mode dispersion caused by the cross-sectional shapes of the cores being changed to noncircular shapes is reduced. In the case where all of the center core 114, and the peripheral cores 115 and 116 are composed of silica glass doped with chlorine, as in the case of the multi-core optical fiber 200, it is difficult to deform and thus the polarization mode dispersion is reduced.

As described above, the viscosity of pure silica glass or silica glass doped with chlorine in minute amounts, when heated, is higher than that of silica glass doped with fluorine. Therefore, the tension during the drawing is concentrated in the core portions, and a tensile stress remains in the core portions after the drawing. In addition, by controlling the tension during the drawing appropriately, the amount of change in the refractive index of the core portions due to the residual tensile stress in the cores portions can be adjusted. Therefore, in the drawing step of the multi-core optical fibers 100 and 200 according to the first and the second embodiments, the relative refractive index differences can be adjusted to some extent.

The multi-core optical fiber 100 is constituted by two types of cores each having different amounts of doped chlorine. In this manner, when plural types of cores are applied to a multi-core optical fiber, the symmetry on the cross-section of the multi-core optical fiber is deteriorated, which makes the cores more likely to deform in the manufacturing process. However, as in the multi-core optical fiber 100, when a cladding composed of silica glass doped with fluorine is applied to a multi-core optical fiber and cores composed of pure silica glass or silica glass doped with chlorine are applied thereto, the viscosity of the cores is higher than the viscosity of the cladding, thereby preventing the cores from reforming in the manufacturing process.

Furthermore, when the multi-core optical fibers 100 and 200 are used, the two multi-core optical fibers 100 and 200 are fusion-spliced to each other. At this time, by discharge-heating in the fusion splicing, a part of fluorine in the cladding 120 is diffused in the core portions (the center core 111, and the peripheral cores 112 and 113 in the multi-core optical fiber 100, and the center core 114, and the peripheral cores 115 and 116 in the multi-core optical fiber 200), whereby the relative refractive index differences in the cores are reduced to expand the mode field diameter (MFD). As a result, the misalignment tolerance in the cores required for realizing desired splicing losses is increased.

In the multi-core optical fiber 100 the relative refractive index differences of cores adjacent to each other are different. In the multi-core optical fiber 200 the diameters of cores adjacent to each other are different. In this manner, the relative refractive index differences or the diameters are set to different values between cores adjacent to each other, thereby enabling reduction in crosstalk between the cores. Therefore, an increase in the crosstalk can be prevented even when the core interval is made narrow. Compared with a typical multi-core optical fiber (diameter of 125 µm) in which four cores are arranged with a core interval of 75 µm therebetween, in the multi-core optical fibers 100 and 200 according to the embodiments, the number of cores are large and the core interval is narrow. However, in the multi-core optical fibers 100 and 200, the crosstalk does not become a problem, and has been confirmed to be sufficiently reduced.

It is preferable that the center-to-center spacing of the cores be 20 µm to 45 µm. When the center-to-center spacing of the plural cores exceeds 45 µm, the number of cores capable of being arranged inside a multi-core optical fiber is restricted, or the diameter of a multi-core optical fiber is made large when the multi-core optical fiber including a desired number of cores is formed. Therefore, the distance between the centers of the cores is preferably set to 45 µm. In consideration of the case where 19 cores are arranged inside a typical multi-core optical fiber with a diameter of 125 µm (six and twelve peripheral cores are arranged on a double circumference with respect to the center of a center core), the center-to-center spacing of the cores is preferably set to 20 µm or more.

For example, in the embodiments, while the case where the number of the peripheral cores is six is explained, the number of the cores is not limited thereto. The positions of the peripheral cores are not necessarily arranged on the circumference with respect to the center axis Aₓ of the multi-core optical fiber (center of the multi-core optical fiber), as in the embodiments. Furthermore, a configuration in which the center core is not provided in the center of the multi-core optical fiber can be employed.

The amount of chlorine doped into the silica glass of the center cores and the peripheral cores in the multi-core optical fibers in the embodiments is an example, and can be changed as appropriate. The amount of fluorine doped into the silica glass of the cladding can also be changed as appropriate.

Next, a crosstalk reduction structure applicable to the multi-core optical fibers will now be described in detail. For example, as shown in Fig. 3 in the proceedings 2 of the Society Conference of 2010, The Institute of Electronics, Information and Communication Engineers (2010 IEICB), B-10-16 (2010/Sep./14-17), crosstalk of a multi-core optical fiber is changed depending on the bending radius.

Crosstalk in a state of a straight line (infinite bending radius) can be reduced by making the diameter differences between cores adjacent to each other large. For example, the crosstalk (average value in simulations) of a fiber A having a core-diameter difference of 5.5% with the infinite bending radius is approximately -40 dB, whereas the crosstalk of a fiber B having a core-diameter difference of 14.9% is approximately -55 dB.

By contrast, in terms of the amount of change in crosstalk by the bending radius, the fiber A has an amount of approximately 25 dB (from -40 dB to -15 dB), whereas the fiber B has an amount of approximately 35 dB (from -55 dB to -20 dB). The fiber B with a large core-diameter difference has a large amount of change in the crosstalk by the bending radius.

Accordingly, when the bending radius can be estimated in advance as for a usage state of a multi-core optical fiber, it is sufficient to design a multi-core optical fiber with a core-diameter difference corresponding to the bending radius (the fiber A and the fiber B have different bending radii with which the crosstalk is most degraded). However, if the bending radius cannot be estimated in advance, it is preferable that the amount of change in the crosstalk by the bending radius be reduced by making the core-diameter difference small to reduce the absolute value of the crosstalk by means of providing a leakage reduction portion or the like. When the leakage reduction portion is applied to the multi-core optical fiber according to each of the above-mentioned examples, the multi-core optical fiber comprises
plural cores extending along a predetermined axis direction; and
a cladding surrounding each of the plural cores,
wherein the cladding is comprised of silica glass doped with fluorine, and
wherein each of the plural cores is comprised of silica glass doped with chlorine or pure silica glass.

In view of the manufacturing property of a multi-core optical fiber and the splicing property of a multi-core optical fiber, a multi-core optical fiber preferably have no core-diameter difference. In the above explanation, the core-diameter difference in the multi-core optical fiber alone is mentioned. However, because the dependency of the crosstalk on the bending radius is affected by the equivalent refractive index, the same as the core-diameter difference applies to the relative refractive index difference between cores.

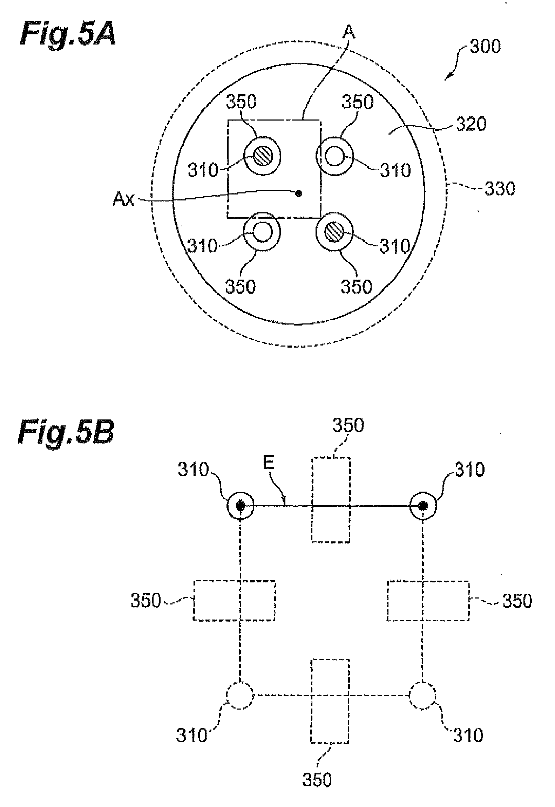

In particular, a multi-core optical fiber to which a leakage reduction portion is applied will now be described below. Figs. 5A and 5B are views for explaining arrangement conditions of the leakage reduction portion applied to the multi-core optical fiber according to the present invention. To simplify the structure of the multi-core optical fiber, a multi-core optical fiber having four cores will be described below.

As for an example, the multi-core optical fiber 300 in which each of four cores 310 is surrounded by a cladding 320 is shown in Fig. 5A. The outer peripheral surface of the multi-core optical fiber 300 is covered by a covering portion 330, and the four cores 310 are arranged in a manner surrounding the center axis Aₓ of the multi-core optical fiber 300. The cladding 320 has different functions in a peripheral region of each of the cores 310 and a region other than the peripheral region, More specifically, the cladding 320, as will be described later, is differentiated into an optical cladding that contributes to light propagation in each of the cores 310 serving as a waveguide, and a physical cladding that provides a certain amount of strength to the multi-core optical fiber 300 so as to protect each of the cores 310 physically.

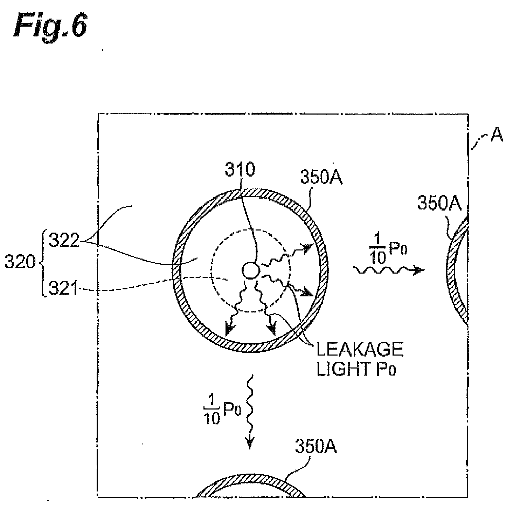

As described above, in the multi-core optical fiber 300 having the four cores (Fig. 5A), a leakage reduction portion 350 is provided in a peripheral cladding region of each of the cores 310. More specifically, as shown in Fig. 5B, in the multi-core optical fiber 300 according to the embodiment, the leakage reduction portion 350 is arranged on a straight line E connecting the centers of the cores 310 adjacent to each other, such that at least a part of the leakage reduction portion 350 is positioned thereon. A more specific configuration is shown in Fig. 6. Fig. 6 is a schematic for explaining the structure and the function of the leakage reduction portion as well as a leakage light generation mechanism, and corresponds to a region A shown in Fig. 5A (region on the cross-section of the multi-core optical fiber 300 perpendicular to the center axis Aₓ).

In the example shown in Fig. 6, a ring-shaped leakage reduction portion 350A is prepared for each of the cores 310, and formed in the cladding 320 on the periphery of the core 310 corresponding thereto. In particular, in the example shown in Fig. 6, the cladding 320 comprises an optical cladding 321 provided on the outer periphery of the core 310 as a region that has an influence on the transmission characteristics of light propagating in the core 310, and a physical cladding 322 provided on the outer periphery of the optical cladding 321 as a region that has no influence on the transmission characteristics of light propagating in the core 310. It is preferable that the leakage reduction portion 350A be formed within the physical cladding 322 so as to avoid degradation in the transmission performance of each of the cores 310. The optical cladding 321 and the physical cladding 322 are regions that are differentiated from each other based on a functional point of view of whether they have an influence on the transmission characteristics. Therefore, it is impossible to differentiate them structurally based on composition or the like. Accordingly, in the accompanying drawings, to facilitate understanding of the present invention, the boundary between the optical cladding 321 and the physical cladding 322 that form the cladding 320 is indicated by a dashed line for convenience.

As shown in Fig. 6, the leakage reduction portion 350A is a region that reduces the power of leakage light from the core 310, and functions to effectively reduce the light quantity of leakage light by deflection control by means of absorption, scattering, confinement, and the like. In the cross-section of the multi-core optical fiber 300 perpendicular to the center axis Aₓ, the leakage reduction portion 350A is provided between the position at which the distance from the center of the core 310 is five-halves times the MFD at a wavelength of 1.55 µm of a region composed of the core 310 and a part of the cladding 320 positioned on the periphery thereof (region functioning as a single optical fiber), and the outer peripheral surface of the cladding 320 (interface between the physical cladding 322 and the covering portion 330). Alternatively, the leakage reduction portion 350A may be provided between the position at which the electric field amplitude in the region composed of the core 310 and a part of the cladding 320 positioned on the periphery thereof is 10⁻⁴ or less of the peak value thereof, and the outer peripheral surface of the cladding 320.

In the configuration described above, when leakage light with a light quantity of P₀ from the core 310 reaches the leakage reduction portion 350A because of small-diameter bending (bending at a small radius of curvature applied to the multi-core optical fiber 300 during high-power light propagation), most of the leakage light is absorbed in the leakage reduction portion 350A. More specifically, the light quantity of the leakage light passing through the leakage reduction portion 350A is reduced to one-tenth of the light quantity P₀ of the leakage light arriving at the leakage reduction portion 350A (see Fig. 6). As a result, the crosstalk caused by the arrival of the leakage light at the core 310 adjacent thereto is effectively reduced.

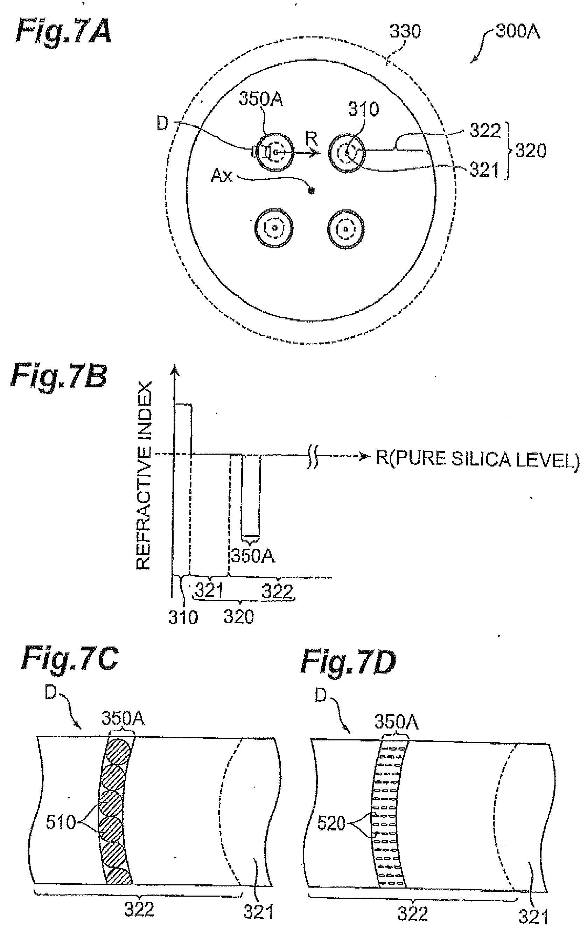

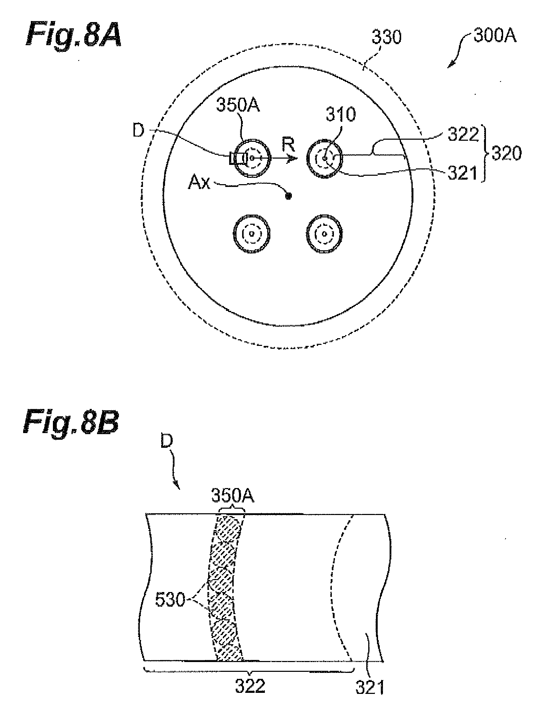

A more specific structure of the leakage reduction portion 350 (corresponding to 350A in Fig. 6) will now be described with reference to Figs. 7A to 7D, and FIGS. 8A and 8B. In Figs. 7A to 7D, and Figs. 8A and 8B, examples of the multi-core optical fiber 300 in Fig. 5A is shown. However, the leakage reduction portion 350A can also be formed in other multi-core optical fibers in which the number of cores and the arrangement of cores are different therefrom in the same manner. The leakage reduction portion 350A has a deflection-control function by absorption, scattering, confinement, and the like.

Figs. 7A to 7D are views for explaining a first specific example of the leakage reduction portion 350A applicable to a multi-core optical fiber 300A. Fig. 7A shows the cross-sectional structure of the multi-core optical fiber 300A, which corresponds to the cross-sectional structure of Fig. 5A. In the first specific example, as for the leakage reduction portion 350A, a layer with low refractive index referred to as a trench layer is provided in a manner formed in a ring shape and surrounding the core 310. In other words, the leakage reduction portion 350A of the first specific example performs deflection control of leakage light by confining the leakage light within a region inside the leakage reduction portion 350A. Fig. 7B is a refractive index profile of one core fiber region in the multi-core optical fiber 300A. Fig. 7C is an enlarged schematic of a portion D in Fig. 7A, and is an example in which a layer with low refractive index is realized by forming plural hollow holes 510 as the leakage reduction portion 350A according to the first specific example. Fig. 7D is an enlarged schematic of the portion D in Fig. 7A, and is an example in which a layer with low refractive index is realized by forming plural voids 520 as the leakage reduction portion 350A according to the first specific example.

The multi-core optical fiber 300A is a silica-based glass fiber. In the cross section shown in Fig. 7A, the plural cores 310 are arranged, the optical claddings 321 are arranged on the periphery of the plural cores 310, and the physical claddings 322 are arranged on the periphery of the optical claddings 321. The ring-shaped leakage reduction portion 350A surrounding each of the cores 310 is provided within the physical cladding 322. The leakage reduction portion 350A according to the first specific example functions to suppress propagation of leakage light to the core 310 adjacent thereto by confining the leakage light that has propagated from the core 310 within an inside region surrounded by the leakage reduction portion 350A. In the multi-core optical fiber 300A having such a structure, the core 310 is composed of silica glass doped with chlorine, the cladding 320 is composed of pure silica glass, and the relative refractive index difference of the core 310 with respect to the cladding 320 is 0.35% (0.4% or less). The outer diameter of the core 310 is 8.5 µm. Such a region composed of the core 310 and a part of the cladding on the periphery thereof (region functioning as a single optical fiber) has an MFD of 10.2 µm at a wavelength of 1.55 µm. The electric field amplitude in this region has a peak value at the center of the core 310 (hereinafter, referred to as a "core center"), and the position at which the amplitude is 10⁻⁴ of the peak value is a position away from the core center by 28.5 µm. Therefore, it is preferable that the leakage reduction portion 350A be provided apart from the core center by equal to or more than 25.5 µm (a distance of five-halves times the MFD) along the radial direction R, or be provided within the physical cladding 322 apart from the core center by equal to or more than 28.5 µm along the radial direction R. In the first specific example, the leakage reduction portion 350A is a ring-shaped region formed in the range of 35 µm to 50 µm from the core center.

First means for realizing the leakage reduction portion 350A according to the first specific example realizes deflection control of leakage light from each of the cores 310 by designing a refractive index profile as shown in Fig. 7B. In the first means, in particular, deflection control of leakage light is performed by employing a trench-structure refractive index profile as the refractive index profile for each of the plural core fiber regions in the multi-core optical fiber 300A. In other words, as shown in Fig. 7B, by doping F to the silica glass region corresponding to the leakage reduction portion 350A, the relative refractive index difference of the leakage reduction portion 350A with respect to the optical cladding 321 is set to -0.7%. The multi-core optical fiber 300A is a silica-based fiber. As is clear from the refractive index profile in Fig. 7B, the core 310 is composed of silica glass doped with chlorine, and the cladding 320 is composed of pure silica glass. The relative refractive index difference between the core 310 and the cladding 320 is 0.4% or less. The refractive index of the leakage reduction portion 350A provided within the physical cladding 322 is made lower than that of pure silica glass by doping F (refractive index reducer) thereto.

Fig. 7C is an enlarged schematic of the portion D in Fig. 7A, and shows second means for realizing deflection control of leakage light from the core 310 as for the leakage reduction portion 350A according to the first specific example. The second means performs the deflection control of the leakage light by providing the plural hollow holes 510 extending along the center axis Aₓ in a region corresponding to the leakage reduction portion 350A.

Fig. 7D is an enlarged schematic of the portion D in Fig. 7A, and shows third means for realizing deflection control of leakage light as for the leakage reduction portion 350A according to the first specific example. The third means performs the deflection control of the leakage light by forming the leakage reduction portion 350A formed by dispersing the voids 520 within a region that is a ring-shaped region surrounding the core 310 on the cross-section shown in Fig. 7A, and extends along the center axis Aₓ.

As in the above-described first to third means, by forming the leakage reduction portion 350A as a low-refractive index region, a hollow hole formation region, or a void-dispersed region, the relative refractive index difference of the leakage reduction portion 350A with respect to the cladding 320 is made significantly low. As a result, a part of the leakage light propagating from the core 310 toward the core 310 adjacent thereto because of small-radius bending or the like is confined within an inside region surrounded by the leakage reduction portion 350A.

The proportion of light confined within the inside region surrounded by the leakage reduction portion 350A to the leakage light propagating from the core 310 toward the covering portion 330 of the multi-core optical fiber 300A can be adjusted by, for example, the distance from the core 310 to the leakage reduction portion 350A, the thickness of the leakage reduction portion 350A, the relative refractive index difference of the leakage reduction portion 350A with respect to the cladding 320 in the configuration of the first means, the arrangement of the hollow holes in the configuration of the second means, and the arrangement of the voids in the configuration of the third means. Therefore, it is possible to reduce the light quantity of the leakage light that has passed through the leakage reduction portion 350A to equal to or lower than one-tenth of the light quantity P₀ of the leakage light that has arrived at the leakage reduction portion 350A through a part of the cladding 320 (optical cladding 321). With an appropriate arrangement of the hollow holes or the voids, it is also possible to confine the leakage light within the inside region surrounded by the leakage reduction portion 350A by means of a photonic band-gap effect.

The leakage reduction portion 350A formed as described above exists, in a region composed of each of the cores 310 and the cladding on the periphery thereof, at a position away from the center of the core 310 by equal to or more than five-halves times the MFD, or outside the position at which the electric field amplitude in the region is 10⁻⁴ or less of the peak value (the peak value is taken at the core center). Therefore, the influence exerted by the existence of the leakage reduction portion 350A on light propagating within the core 310 is at an effectively negligible level, and the influence exerted by the leakage reduction portion 350A on the characteristics such as transmission losses is also at a negligible level. Because a part of the leakage light leaks to outside the leakage reduction portion 350A, the light component confined within the inside region of the leakage reduction portion 350A is also gradually attenuated with the propagation of the light. Therefore, the light component confined within the inside region surrounded by the leakage reduction portion 350A does not couple to the light propagating in the core 310 again (the light component confined within the inside region of the leakage reduction portion 350A can be prevented from having an influence on the transmission characteristics of the light propagating in the core 310 substantially).

Figs. 8A and 8B are views for explaining a second specific example of the leakage reduction portion applicable to the multi-core optical fiber according to the present invention. The leakage reduction portion 350A according to the second specific example performs deflection control of leakage light by increasing scattering of the leakage light that has reached from the core 310 in the region composed of each of the cores and a part of the cladding 320 on the periphery thereof. Fig. 8A shows the cross-sectional structure of the multi-core optical fiber 300A, which corresponds to the cross-sectional structure of Fig. 5A. In the second specific example as swell, similarly to the first specific example, the leakage reduction portion 350A is formed in a ring shape surrounding the core 310. Fig. 8B is an enlarged schematic of the portion D in Fig. 8A, and is an example for realizing a region formed such that at least one of the absorption coefficient or the scattering coefficient is greater than that of the cladding region as for the leakage reduction portion 350A according to the second specific example.

On the cross-section of the multi-core optical fiber 300A shown in Fig. 8A, the leakage reduction portion 350A is arranged around each of the core 310. The cladding 320 can be differentiated into the optical cladding 321 positioned on the periphery of each of the cores 310, and the physical cladding 322. The ring-shaped leakage reduction portion 350A surrounding each of the cores 310 is provided in the physical cladding 322. The leakage reduction portion 350A according to the second specific example functions to suppress propagation of leakage light to the core 310 adjacent thereto by confining the leakage light that has propagated from the core 310 within an inside region surrounded by the leakage reduction portion 350A. In a region having such a structure and including the core 310, the core 310 is composed of silica glass doped with chlorine, and the cladding 320 is composed of pure silica glass. The relative refractive index difference of the core 310 with respect to the cladding 320 is 1%. The outer diameter of the core 310 is 30 µm. In such a region including the core 310, the core 310 is into a multimode at a wavelength of 1.55 µm, whereas the MFD of the fundamental mode is 19.8 µm, The electric field amplitude in each of the regions including the core 310 takes a peak value at the core center, and the position at which the amplitude is 10⁻⁴ of the peak value is a position away from the core center by 23.1 µm. Therefore, the leakage reduction portion 350A according to the second specific example is provided apart from the core center by 49.5 µm or more (a distance of five-halves times the MFD) along the radial direction R, or provided within the physical cladding 322 apart from the core center by 23.1 µm or more along the radial direction R. In the second specific example, the leakage reduction portion 350A is a ring-shaped region formed in the range of 35 µm to 50 µm from the core center.

Means for deflection control of the leakage light shown in Fig. 8B performs the deflection control of the leakage light by increasing in scattering of the leakage light with minute anisotropic members 530 added to a region corresponding to the leakage reduction portion 350A. Examples of such a leakage reduction portion 350A include glass containing elongated silver halide particles (minute anisotropic members 530).

By adding the minute anisotropic members 530 to the ring-shaped leakage reduction portion 350A as described above, scattering of the leakage light in the leakage reduction portion 350A (as a result, the leakage light is deflected), and absorption of the leakage light (the leakage light is attenuated) are greater than those of the other glass regions. In other words, the leakage reduction portion 350A has a large absorption coefficient and a large scattering coefficient compared with the cladding 320. Therefore, by means of the leakage reduction portion 350A according to the second specific example as well, it is possible to reduce the light quantity of the leakage light passing through the leakage reduction portion 350A and propagating toward the core 310 adjacent thereto effectively. In the above description, the leakage reduction portion is applied to a multi-core optical fiber constituted by plural core each doped with chlorine and a cladding of a pure silica glass. However, when the leakage reduction portion is applied to a multi-core optical fiber according to each of the above-mentioned embodiment, silica glass of the cladding 320 is necessarily doped with fluorine.

In accordance with the present invention, the multi-core optical fiber in which transmission losses and nonlinearity are reduced is provided. The leakage reduction portion arranged such that at least a part thereof is positioned between cores adjacent to each other among the plural cores is provided in the cladding, whereby an advantageous effect of reduction in crosstalk between adjacent cores can be obtained without increasing transmission losses in the multi-core optical fiber.

## Claims

1. A multi-core optical fiber (300, 300A) for optical communications, comprising:
plural cores (310) extending along a predetermined axis direction; and
a cladding (320) surrounding each of the plural cores (310),
wherein the cladding (320) is comprised of silica glass doped with fluorine, and
wherein each of the plural cores (310) is comprised of silica glass doped with chlorine or pure silica glass,
**characterized by**:
leakage reduction portions (350A) each provided between an outer peripheral surface of the cladding (320) and a position at which a distance from a center of the core (310) is five-halves times a mode field diameter at a wavelength of 1.55 µm in a region including the core (310) or between the outer peripheral surface of the cladding (320) and a position at which an electric field amplitude in a periphery of the core (310) is 10⁻⁴ or less of the peak value thereof, and in that
the cladding (320) comprises an optical cladding (321) provided on the outer periphery of the core (310) and a physical cladding (322) provided on the outer periphery of the optical cladding (321), wherein the leakage reduction portions (350A) being formed within the physical cladding (322), and wherein at least one of the leakage reduction portions (350A) is formed in the cladding so as to have a ring shape surrounding a core corresponding thereto among the plural cores (310) on a cross-section perpendicular to the predetermined axis direction, and
each of the leakage reduction portions (350A) has a first structure or a second structure,
the first structure being defined by a refractive index profile such that a confinement factor of propagating light in a region surrounded by the leakage reduction portion (350A) is raised,
the second structure being composed of a material that reduces power of propagating light, the material having a scattering coefficient greater than a scattering coefficient of the cladding (320).

2. The multi-core optical fiber (300, 300A) according to claim 1, wherein
a distance between centers of cores adjacent to each other among the plural cores (310) is 20 µm to 45 µm.

3. The multi-core optical fiber (300, 300A) according to claim 1 or 2, wherein
between cores adjacent to each other among the plural cores (310), their amounts of doped chlorine are different from each other.

4. The multi-core optical fiber (300, 300A) according to any one of claims 1 to 3, wherein
at least one of a relative refractive index difference or a diameter is different between cores adjacent to each other among the plural cores (310), and such a difference is set greater than an arithmetic average of the plural cores by 5% or more.

5. The multi-core optical fiber (300, 300A) according to claim 1, wherein
at least one of the leakage reduction portions (350A) has, as the first structure, the refractive index efficiently reduced by doping of a refractive index reducer or forming of a hollow hole.

6. The multi-core optical fiber (300A) according to any one of claims 1 to 5, wherein
the leakage reduction portion reduces light quantity of leakage light passing through the leakage reduction portion to one-tenth or less of light quantity of leakage light arriving at the leakage reduction portion.

7. The multi-core optical fiber (300A) according to claim 6, wherein
the mode field diameter at the wavelength of 1.55 µm is a mode field diameter of a fundamental mode.

8. The multi-core optical fiber (300; 300A) according to any one of claims 1-7, wherein
the core (310) is a core in which polarization mode dispersion occurs.

9. The multi-core optical fiber (300; 300A) according to claim 5, wherein
the hollow hole includes a void (520).

## Patentansprüche

1. Mehrkernige optische Faser (300, 300A) für optische Kommunikation, mit
mehreren Kernen (310), die sich entlang einer vorbestimmten Axialrichtung erstrecken; und
einem Mantel (320), der jeden der mehreren Kerne (310) umgibt,
wobei der Mantel (320) Silikatglas dotiert mit Fluor aufweist, und
wobei jeder der mehreren Kerne (310) Silikatglas dotiert mit Chlor oder reines Silikatglas aufweist,
**gekennzeichnet, durch**:
Verlustverminderungsabschnitte (350A), die jeweils zwischen einer äußeren Umfangsfläche des Mantels (320) und einer Position an der ein Abstand von einer Mitte des Kerns (310) das Fünf-Halbe-fache eines Modenfelddurchmessers bei einer Wellenlänge von 1,55 µm in einem Bereich einschließlich des Kerns (310) beträgt oder zwischen der äußeren Umfangsfläche des Mantels (320) und einer Position an der die elektrische Feldamplitude in einer Umgebung des Kerns (310) 10⁻⁴ oder weniger des Spitzenwerts davon beträgt, vorgesehen sind und **dadurch**, dass
der Mantel (320) einen optischen Mantel (321) vorgesehen auf dem äußeren Umfang des Kerns (310) und einen physischen Mantel (322) aufweist, der auf einem äußeren Umfang des optischen Mantels (321) vorgesehen ist, wobei die Verlustverminderungsabschnitte (350A) innerhalb des physischen Mantels (322) ausgebildet sind, und wobei zumindest einer der Verlustverminderungsabschnitte (350A) derart in dem Mantel ausgebildet ist, dass er eine Ringform aufweist, die einen dazu entsprechenden Kern der mehreren Kerne (310) in einem Querschnitt senkrecht zu der vorbestimmten Axialrichtung umgibt, und
jeder der Verlustverminderungsabschnitte (350A) eine erste oder eine zweite Struktur aufweist, wobei
die erste Struktur definiert wird **durch** ein Brechungsindexprofil, sodass ein Einschlussfaktor von Licht, das sich in einem Bereich umgeben **durch** den Verlustverminderungsabschnitt (350A) ausbreitet, erhöht ist, und
die zweite Struktur aus einem Material zusammengesetzt ist, dass die Leistung des sich ausbreitenden Lichts reduziert wobei das Material einen Streukoeffizienten größer als einen Streukoeffizienten des Mantels (320) aufweist.

2. Mehrkernige optische Faser (300, 300A) nach Anspruch 1, wobei
ein Abstand zwischen Mitten der Kerne der mehreren Kerne (310), die miteinander benachbart sind, 20 µm bis 45 µm beträgt.

3. Mehrkernige optische Faser (300, 300A) nach Anspruch 1 oder 2, wobei
sich zwischen einander benachbarten Kernen der mehreren Kerne (310) deren Menge des dotierten Chlors voneinander unterscheidet.

4. Mehrkernige optische Faser (300, 300A) nach einem der Ansprüche 1 bis 3, wobei
zumindest eines aus einer relativen Brechungsindexdifferenz oder eines Durchmessers zwischen benachbarten Kernen der mehreren Kerne (310) unterschiedlich ist und eine solche Differenz 5 % oder mehr größer eingestellt ist als ein arithmetischer Mittelwert der mehreren Kerne.

5. Mehrkernige optische Faser (300, 300A) nach Anspruch 1, wobei
zumindest ein Verlustverminderungsabschnitt (350A) als die erste Struktur, den Brechungsindex effektiv reduziert durch Dotieren mit einem Brechungsindexverminderer oder durch Ausbilden eines hohlen Lochs, aufweist.

6. Mehrkernige optische Faser (300) nach einem der Ansprüche 1 bis 5, wobei
der Verlustverminderungsabschnitt eine Lichtmenge von Verlustlicht, das durch den Verlustverminderungsabschnitt tritt auf ein Zehntel oder weniger der Lichtmenge von Verlustlicht welches in dem Verlustverminderungsabschnitt ankommt, verringert.

7. Mehrkernige optische Faser (300A) nach Anspruch 6, wobei der Modenfelddurchmesser bei einer Wellenlänge von 1,55 µm ein Modenfelddurchmesser einer fundamentalen Mode ist.

8. Mehrkernige optische Faser (300; 300A) nach einem der Ansprüche 1 bis 7, wobei
der Kern (310) ein Kern ist, in dem eine Polarisations-Modendispersion auftritt.

9. Mehrkernige optische Faser (300; 300A) nach Anspruch 5, wobei
das hohle Loch einen Leerraum (520) aufweist.

## Revendications

1. Fibre optique multinoyau (300, 300A) pour des communications optiques, comprenant :
plusieurs noyaux (310) s'étendant le long d'une direction d'axe prédéterminée ; et
une gaine (320) entourant chacun des noyaux (310) de la pluralité de noyaux ;
dans laquelle la gaine (320) est constituée d'un verre de silice dopé au fluor, et
dans laquelle chaque noyau de la pluralité de noyaux (310) est constitué de verre de silice dopé au chlore ou de verre de silice pur,
**caractérisée en ce que** :
des parties de réduction de fuite (350A) fournie chacune entre une surface périphérique extérieure de la gaine (320) et une position à laquelle une distance depuis un centre du noyau (310) est égale à cinq demi fois un diamètre de champ de mode à une longueur d'onde de 1,55 µm dans une région comprenant le noyau (310) ou entre la surface périphérique extérieure de la gaine (320) et une position à laquelle une amplitude de champ électrique dans une périphérie du noyau (310) est inférieure ou égale à 10⁻⁴ de sa valeur de pic, et **en ce que**
la gaine (320) comprend une gaine optique (321) fournie sur la périphérie extérieure du noyau (310) et une gaine physique (322) fournie sur la périphérie extérieure de la gaine optique (321), dans laquelle les parties de réduction de fuite (350A) sont formées à l'intérieur de la gaine physique (322), et dans laquelle au moins une des parties de réduction de fuite (350A) est formée dans la gaine de façon à avoir une forme d'anneau entourant un noyau correspondant à celle-ci parmi la pluralité de noyaux (310) sur une coupe transversale perpendiculaire à la direction d'axe prédéterminée, et
chacune des parties de réduction de fuite (350A) ayant une première structure ou une seconde structure,
la première structure étant définie par un profil à indice de réfraction de sorte qu'un facteur de confinement d'une lumière se propageant dans une région entourée par la partie de réduction de fuite (350A) soit augmenté,
la seconde structure étant constituée d'un matériau qui réduit la puissance de la lumière se propageant, le matériau ayant un coefficient de diffusion supérieur à un coefficient de diffusion de la gaine (320).

2. Fibre optique multinoyau (300, 300A) selon la revendication 1, dans laquelle
une distance entre les centres de noyaux adjacents les uns par rapport aux autres parmi la pluralité de noyaux (310) est située dans une plage allant de 20 µm à 45 µm.

3. Fibre optique multinoyau (300, 300A) selon la revendication 1 ou 2, dans laquelle
entre des noyaux adjacents les uns par rapport aux autres parmi la pluralité de noyaux (310), leurs quantités de dopage au chlore diffèrent l'une de l'autre.

4. Fibre optique multinoyau (300, 300A) selon l'une quelconque des revendications 1 à 3, dans laquelle
au moins un élément parmi une différence d'indice de réfraction relative ou un diamètre diffère entre des noyaux adjacents les uns par rapport aux autres parmi la pluralité de noyaux (310), et cette différence est configurée de façon à être supérieure de 5 % ou plus à une moyenne arithmétique de la pluralité de noyaux.

5. Fibre optique multinoyau (300, 300A) selon la revendication 1, dans laquelle
au moins une des parties de réduction de fuite (350A) a, comme la première structure, l'indice de réfraction réduit de manière efficace en dopant un réducteur d'indice de réfraction ou en formant un trou creux.

6. Fibre optique multinoyau (300A) selon l'une quelconque des revendications 1 à 5, dans laquelle
la partie de réduction de fuite réduit la quantité de lumière d'une lumière de fuite passant à travers la partie de réduction de fuite à un dixième ou moins de la quantité de lumière de la lumière de fuite arrivant à la partie de réduction de fuite.

7. Fibre optique multinoyau (300A) selon la revendication 6, dans laquelle
le diamètre de champ de mode à la longueur d'onde de 1,55 µm est un diamètre de champ de mode d'un mode fondamental.

8. Fibre optique multinoyau (300 ; 300A) selon l'une quelconque des revendications 1 à 7, dans laquelle
le noyau (310) est un noyau dans lequel apparait une dispersion de modes de polarisation.

9. Fibre optique multinoyau (300 ; 300A) selon la revendication 5, dans laquelle
le trou creux comprend un vide (520).
